# EUROPÄISCHE PATENTSCHRIFT

(11) **EP 2 006 250 B1**
(45) Veröffentlichungstag und Bekanntmachung des Hinweises auf die Patenterteilung: **06.03.2013**
(21) Anmeldenummer: 08156877.6
(22) Anmeldetag: 26.05.2008
(51) Int. Cl.: C01B 33/04, C01B 33/107, C07F 7/08, C07F 7/12

(54) **Verfahren zur Herstellung von SiH-haltigen Silanen**
Process for preparing SiH-containing silanes
Procédé de préparation de silanes comportant des groupes SiH

(30) Priorität: 20.06.2007 DE 102007028254
(43) Veröffentlichungstag der Anmeldung: 24.12.2008
(73) Patentinhaber: Wacker Chemie AG, 81737 München (DE)
(72) Erfinder: Geisberger, Gilbert, 84503, Altötting (DE); Wewers, Wolfgang, 84489, Burghausen (DE)
(74) Vertreter: Fritz, Helmut

(56) Entgegenhaltungen:
- EP-A- 0 093 640
- DE-A1- 3 500 318
- DE-A1-102004 045 245
- DE-B- 1 264 442

## Beschreibung

Die Erfindung betrifft ein Verfahren zur Herstellung von Wasserstoff enthaltenden Silanen durch Disproportionierung eines höher chlorierten Silanes in Gegenwart eines homogenen Katalysators.

Der Bedarf der Organylhydrogenchlorsilane MeSiHCl₂ und Me₂SiHCl ist wesentlich höher als der Anfall als Nebenprodukte bei der Direktsynthese beim Müller-Rochow-Prozess.

In der EP 286074 A ist ein Verfahren zur Disproportionierung von MeSiHCl₂ zu MeSiH₃ in Gegenwart eines heterogenen Katalysators in einer Destillationskolonne beschrieben. Bei dem Verfahren ist die Standzeit des heterogenen Katalysators begrenzt. Zum Austausch des Katalysators ist zumindest die Außerbetriebnahme des mit dem Katalysator befüllten Anlagenteils notwendig, damit der Katalysator in der Destillationskolonne regeneriert werden kann. Häufig ist ein Öffnen der Destillationskolonne und Austausch des Katalysators gegen frischen Katalysator erforderlich.

EP 685483 A beschreibt die Disproportionierung von MeSiHCl₂ zu MeSiH₃ in Gegenwart eines homogenen Katalysators in einer Destillationskolonne. Der Vereinfachung des Verfahrens steht aber die schlechtere Raum-Zeit-Ausbeute und der höhere Energiebedarf entgegen.

In DE 102004045245 A1 ist die Disproportionierung von HSiCl₃ zur Herstellung von SiH₄ in Gegenwart eines heterogenen Katalysators in einer Destillationskolonne mit mindestens einem Seitenreaktor beschrieben. Der heterogene Katalysator befindet sich im Seitenreaktor und kann dadurch einfacher gewechselt werden.

Gegenstand der Erfindung ist ein Verfahren zur Herstellung von Silanen durch Disproportionierung mindestens eines höher chlorierten Silanes, bei dem die Disproportionierungsreaktionen, die ausgewählt werden aus (1), (2) und (3), ausgehend von SiHCl₃ durchgeführt werden :

2 SiHCl₃ → SiH₂Cl₂ + SiCl₄ (1),

3 SiHCl₃ → SiH₃Cl + 2 SiCl₄ (2),

4 SiHCl₃ → SiH₄ + 3 SiCl₄ (3)

oder bei dem die Disproportionierungsreaktionen, die ausgewählt werden aus (4) und (5), ausgehend von MeSiHCl₂ durchgeführt werden:

2 MeSiHCl₂ → MeSiH₂Cl + MeSiCl₃ (4)

3 MeSiHCl₂ → MeSiH₃ + 2 MeSiCl₃ (5),

in Gegenwart eines homogenen Katalysators in einer Vorrichtung, die mindestens mit einer Reaktivdestillationskolonne und mindestens einem Zusatzreaktor, der ausgewählt wird aus Vor- oder Seitenreaktor, ausgestattet ist, wobei im Zusatzreaktor die Edukte über das chemische Gleichgewicht hinaus umgesetzt werden und wobei bei dem Vorreaktor mindestens ein Eduktstrom in den Vorreaktor führt und mindestens ein Teilstrom aus dem Vorreaktor in die Reaktivdestillationskolonne geführt wird und eine direkte Rückführung von Teilströmen aus der Reaktivdestillationskolonne in den Vorreaktor nicht stattfindet.

Im vorliegenden homogenen Verfahren wird durch die Kombination von Vor- bzw. Seitenreaktor mit der Reaktivdestillationskolonne und der hierdurch erhöhten Verweilzeit der Energiebedarf im Vergleich zur reinen der Reaktivdestillationskolonne um bis zu 30% gesenkt.

Neben dem verbesserten Energiebedarf kann durch die Kombination von der Reaktivdestillationskolonne und Seiten-/ Vorreaktor der Umsatz bei identischem Energieeintrag gesteigert werden.

Die Raum-Zeit-Ausbeuten erreichen Werte, die nur mit heterogenen Katalysatoren erreicht werden konnten. Dabei bringen die homogenen Katalysatoren den Vorteil, daß sie in Reinsubstanz oder gelöster Form pumpbar sind. Dadurch wird die Reaktionsführung einfacher, da der Katalysator auch während des bereits laufenden Verfahrens dosiert werden kann, d.h. bei Bedarf die Katalysatorkonzentration erhöht oder erniedrigt, der Katalysator erneuert oder auch gegen einen anderen homogenen Katalysator ausgetauscht werden kann.

Der Zusatzreaktor kann als Vor- oder Seitenreaktor ausgeführt werden.
Ein Vorreaktor bezeichnet hier einen Reaktor, bei dem mindestens ein Eduktstrom in den Vorreaktor führt und mindestens ein Teilstrom aus dem Vorreaktor in die Reaktivdestillationskolonne geführt wird. Eine direkte Rückführung von Teilströmen aus der Reaktivdestillationskolonne in den Vorreaktor findet nicht statt.
Ein Seitenreaktor bezeichnet hier einen Reaktor, bei dem mindestens ein Strom aus der Reaktivdestillationskolonne in den Seitenreaktor geführt und mindestens ein Strom aus dem Seitenreaktor in die Reaktivdestillationskolonne zurückgeführt wird.
Eine direkte Zuführung von Eduktströmen in den Seitenreaktor findet nicht statt.

Bevorzugt werden die Disproportionierungsreaktionen (1), (2) und (3) ausgehend von SiHCl₃ durchgeführt:

2 SiHCl₃ → SiH₂Cl₂ + SiCl₄ (1),

3 SiHCl₃ → SiH₃Cl + 2 SiCl₄ (2),

4 SiHCl₃ → SiH₄Cl + 3 SiCl₄ (3).

Besonders bevorzugt werden die Disproportionierungsreaktionen (4) und (5) ausgehend von MeSiHCl₂ durchgeführt:

2 MeSiHCl₂ → MeSiH₂Cl + MeSiCl₃ (4)

3 MeSiHCl₂ → MeSiH₃ + 2 MeSiCl₃ (5)

Vorzugsweise werden die Silane der allgemeinen Formel (1) gemäß Anspruch 1 zur Herstellung der Silane verwendet, die ausgewählt werden aus MeSiHCl₂ und Me₂SiHCl.

Der homogene Katalysator enthält bevorzugt mindestens eine vollständig organisch substituierte Ammonium-, Phosphonium-oder Imidazolium-Einheit. Beispiele sind quaternäre Ammonium-und Phosphoniumsalze und positiv geladene Heterocyclen, die ein oder mehrere vollständig organisch substituierte Atome aufweisen, die ausgewählt werden aus Stickstoff- und Phosphoratomen. Bevorzugte positiv geladene Heterocyclen sind Imidazoliumsalze und Pyridiniumsalze.

Als Katalysatoren werden vorzugsweise verwendet:
(a) Quaternäre Ammoniumsalze der allgemeinen Formel R¹₄NX¹ und
(b) Quaternäre Phosphoniumsalze der allgemeinen Formel R²₄PX²,
wobei
- **R¹** und **R²**: einen gegebenenfalls halogensubstituierten, gegebenenfalls Heteroatome enthaltenden Kohlenwasserstoffrest und
- **X¹** und **X²**: ein Halogenatom bedeuten.

**R¹** und **R²** können z.B. verzweigte, unverzweigte oder cyclische Alkylreste und Mehrfachbindungssysteme, wie Aryl-, Alkaryl-, sowie Aralkylreste sein. Beispiele für **R¹** und **R²** sind die für **R** aufgeführten Beispiele für gegebenenfalls halogensubstituierte Alkyl-, Aryl- oder Alkarylreste, sowie Aralkylreste, wie die o-, m-, und p-Phenylalkylreste.

Bevorzugt weisen die Reste **R¹** und **R²** 1 bis 18 Kohlenstoffatome, besonders bevorzugt 1 bis 10 Kohlenstoffatome auf, insbesondere ist der Rest **R¹** und **R²** ein Alkylrest mit 2 bis 8 Kohlenstoffatomen.

Das Halogenatom **X¹** und **X²** ist vorzugsweise Chlor, Brom oder Iod, insbesondere Chlor.

Bevorzugt ist das quaternäre Phosphoniumsalz (n-Butyl)₃(n-Octyl)PCl. Die Herstellung derartiger homogener Katalysatoren durch Alkylierung tertiärer Phosphine mit Alkylhalogeniden ist beispielsweise beschrieben in Houben-Weyl, Georg Thieme Verlag, Band XII/1, S. 79-90, 1963.

Als Katalysatoren werden weiterhin vorzugsweise verwendet:
(c) Imidazoliumsalze der allgemeinen Formel 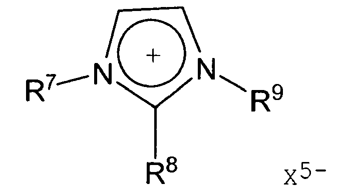 und
(d) Pyridiniumsalzen der allgemeinen Formel 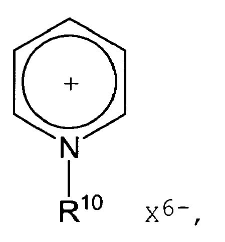 wobei
   **R⁸** Wasserstoff und die Bedeutungen von **R¹** und **R²** aufweist,
   **R⁷, R⁹** und **R¹⁰** die Bedeutungen von **R¹** und **R²** aufweisen und
   **X⁵** und **X⁶** die Bedeutungen von **X¹** und **X²** aufweisen.

Als Katalysatoren werden weiterhin vorzugsweise verwendet:
(e) Ionische Flüssigkeiten, nämlich niedrig schmelzende Salze von quaternären Ammonium-, quaternären Phosphonium-, Pyridinium- und Imidazoliumsalzen. Ihre bevorzugten Schmelzpunkte liegen für das vorliegende Verfahren bei 1 bar bei höchstens 150°C, bevorzugt höchstens 100°C, besonders bevorzugt höchstens 50 °C.

Die Reste der Kationen der ionischen Flüssigkeiten entsprechen vorzugsweise den vorstehend beschriebenen Resten **R¹** und **R²**.

Die ionischen Flüssigkeiten werden bevorzugt als Metall- oder Übergangsmetallhalogenide eingesetzt. Zur Darstellung der Metall- oder Übergangsmetallhalogenide werden z. B. MXₑ mit M= Ga, Fe, Cu, Zn, In, Ti, Cd, Hg, B, Sn, Pb, Bi und X=Halogen verwendet. Es können aber auch andere Zusammen-setzungen verwendet werden. Sie enthalten z. B. folgende Anionen: AlCl₄⁻, Al₂Cl₇⁻, Al₃Cl₁₀⁻, AlEtCl₃⁻, Al₂Et₂Cl₅⁻, BCl₄⁻, BF₄⁻, BEt₃Hex⁻, CuCl₂⁻, Cu₂Cl₃⁻, Cu₃Cl₄⁻, SnCl₃⁻, Sn₂Cl₅⁻, PF₆⁻' H₂PO₄⁻, SbF₆⁻, NO₃⁻, HSO₄⁻, CH₃SO₄⁻, CF₃SO₃⁻, (CF₃SO₂)₂N⁻.

Spezielle Beispiele für ionische Flüssigkeiten sind:
1-Ethyl-3-methyl-imidazoliumchlorid-Aluminiumchlorid (EMIMCL/AlCl₃)
1-Butyl-3-methyl-imidazoliumchlorid-Aluminiumchlorid (BMIMCL/AlCl₃.)
3-Methyl-N-butyl-pyridiniumchlorid-Aluminiumchlorid (3-MBPYCL/AlCl₃)
1-Butyl-pyridiumchlorid-Aluminiumchlorid (BPYCL/AlCl₃)
Tetra-n-butylphosphoniumchlorid-Aluminiumchlorid (TBPCL/AlCl₃).

Besonders bevorzugt sind Imidazoliumsalze.

Geeignete ionische Flüssigkeiten und deren Herstellung sind beispielsweise beschrieben in DE 10157198 A.

Es können reine ionische Flüssigkeiten (e) oder eine Mischung ionischer Flüssigkeiten eingesetzt werden, oder Mischungen aus ionischen Flüssigkeiten (e) mit Salzen, die ausgewählt werden aus den Salzen (a), (b), (c) und (d). Die ionischen Flüssigkeiten (e) können auch gleichzeitig die Funktion eines Lösungsmittels oder Lösungsvermittlers für Salze, die ausgewählt werden aus den Salzen (a), (b), (c) und (d) einnehmen.

Die ionischen Flüssigkeiten werden vorzugsweise zu einem Anteil von 0,1 bis 80 Gewichtsprozent, insbesondere 1-10 Gewichtsprozent in der Reaktionsmischung mit Silanen verwendet.

Die homogenen Katalysatoren (a), (b) (c) und (d) sind im Reaktionsmedium löslich. Diese Katalysatoren werden vorzugsweise in Reinsubstanz, gelöst in einem vorzugsweise hochsiedenden inerten organischen Lösungsmittel, vorzugsweise Kohlenwasserstoff, wie Tetralin oder Decalin, oder gelöst in schwersiedenden Produktsilanen der allgemeinen Formel RₐSiX₄₋ₐ, wobei **R** und **X** die vorstehenden Bedeutungen aufweisen.

Die Phosphonium- und Imidazolium-Katalysatoren zeichnen sich bei den erfindungsgemäßen Verfahren durch eine ausgezeichnete thermische Stabilität in den verschiedenen Organylchlorsilanmedien und durch eine hohe katalytische Aktivität bei den erfindungsgemäßen Disproportionierungsreaktionen aus.

Das erfindungsgemäße Verfahren kann absatzweise, halbkontinuierlich oder vollkontinuierlich durchgeführt werden. Vorzugsweise wird es vollkontinuierlich durchgeführt.
Bei dem erfindungsgemäßen Verfahren wird die Reaktionsführung der Disproportionierung in einer Verschaltung von Reaktivdestillation und Zusatzreaktor durchgeführt. Die erfindungsgemäße Verschaltung der beiden Reaktoren ermöglicht einfache und robuste Reaktionsführung der Disproportionierung weit über das chemische Gleichgewicht hinaus. Der Zusatzreaktor wird genutzt, um eine ausreichende Verweilzeit zu gewährleisten. Durch die Reaktivdestillation wird hingegen die Erhöhung des Umsatzes über das chemische Gleichgewicht hinaus ermöglicht.

Die Disproportionierungsreaktion findet vorzugsweise bei einem Druck von 0,1 bis 20 bar insbesondere 1-5 bar und einer Temperatur von vorzugsweise 0 bis 250°C insbesondere 25 bis 150 °C statt.
Die Silan-Edukte werden in gasförmiger oder flüssiger Form oder gelöst in einem inerten organischen Lösungsmittel, wie Hexan, Toluol, Xylol oder Chlorbenzol, eingesetzt.

Vorzugsweise wird das bei dem erfindungsgemäßen Verfahren durch Disproportionierung von Trichlorsilan hergestellte Dichlorsilan und/oder Monochlorsilan und/oder Silan in einer nachgeschalteten Reaktion mit MeSiCl₃ umgesetzt. Das Zielprodukt MeSiHCl₂ wird in einer Komproportionierungsreaktion in hohen Ausbeuten erhalten.
Als Summengleichung resultiert dann:

MeSiCl₃ + SiHCl₃ → MeSiHCl₂ + SiCl₄ (6)

Weiterhin wird vorzugsweise das bei dem erfindungsgemäßen Verfahren durch Disproportionierung von Methyldichlorsilan hergestellte MeSiH₂Cl und/oder MeSiH₃ in einer nachgeschalteten Reaktion mit Me₂SiCl₂ umgesetzt. Das Zielprodukt Me₂SiHCl wird in einer Komproportionierungsreaktion in hohen Ausbeuten erhalten.
Als Summengleichung resultiert dann:

Me₂SiCl₂ + MeSiCl₂ → Me₂SiHCl + MeSiCl₃ (7)

Die SiH-haltigen Organylchlorsilane sind wertvolle Ausgangsverbindungen zur Herstellung von funktionellen Silanen oder Siloxanen, die über eine Hydrosilylierungsreaktion mit aliphatischen Doppel- oder Dreifachbindungen aufweisenden organischen Verbindungen erhalten werden. Eine weitere Verwendung von beispielsweise Dimethylchlorsilan ist die Herstellung von Dimethylhydrogensilylgruppen aufweisenden Organopolysiloxanen, die bei additionsvernetzenden Siliconkautschuk-Zusammensetzungen eingesetzt werden.

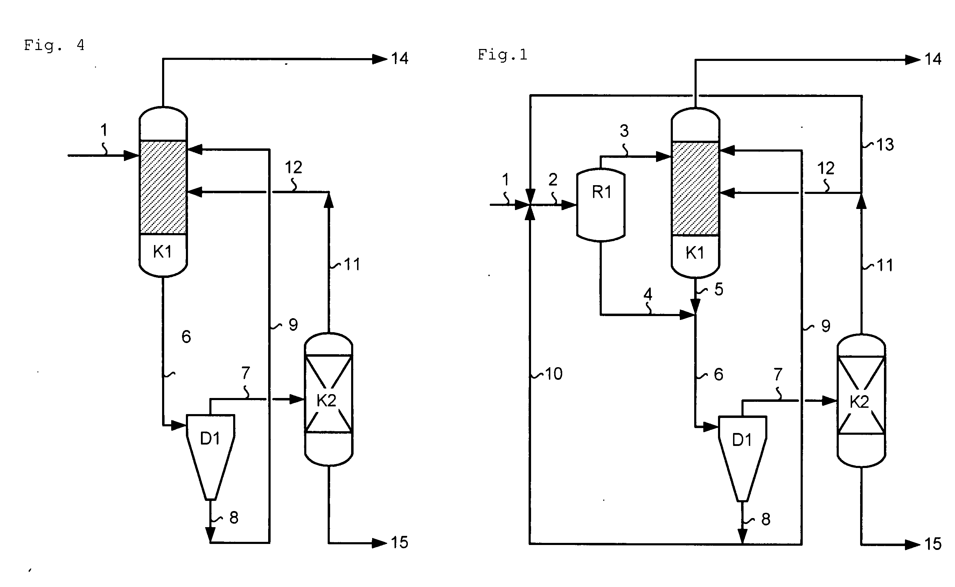

Eine bevorzugte Ausführungsform des erfindungsgemäßen Verfahrens mit einem Vorreaktor wird anhand von Fig. 1 erläutert:
Edukte aus den Strömen (1) und (13) und Katalysator aus Strom (10) werden vermischt und über Strom (2) in den Vorreaktor (R1) eingeleitet. Dort findet bereits eine Disproportionierung statt. Im Vorreaktor (R1) kann durch destillative Auftrennung der Reaktionsprodukte der Umsatz über das chemische Gleichgewicht angehoben werden. Am Kopf des Vorreaktors (R1) werden die niedriger chlorierten Silane angereichert und als Strom (3) in die Reaktivdestillationskolonne (K1) eingeleitet. Dort werden sie über das chemische Gleichgewicht hinaus umgesetzt. Die Katalysator enthaltenden höher chlorierten Silane verlassen als Sumpf im Strom (4) den Vorreaktor (R1). In die Reaktivdestillationskolonne (K1) gelangt Edukt auch über Strom (12). Katalysator erhält die Reaktivdestillationskolonne (K1) über Strom (9). In der Reaktivdestillationskolonne (K1) werden am Kopf die niedriger chlorierten Silane als Strom (14) abgezogen. Die Katalysator enthaltenden höher chlorierten Silane verlassen als Sumpf im Strom (5) die Reaktivdestillationskolonne (K1) und werden gemeinsam mit dem Strom (4) als Strom (6) der Destillationseinheit (D1) zugeführt, in welcher sie in einen Silanstrom (7) und Katalysatorstrom (8) aufgetrennt werden. Der Katalysatorstrom (8) wird in die Ströme (9) und (10) aufgetrennt. Der Silanstrom (7) wird einer Destillationskolonne (K2) zugeführt, aus welcher am Sumpf hochchlorierte Silane als Strom (15) abgeleitet werden und der am Kopf gewonnene Strom (11) aus niedriger chlorierten Silanen in die Ströme (12) und (13) aufgetrennt wird.

Als Reaktortypen für den Vorreaktor (R1) kommen typische Flüssigphasenreaktoren in Betracht, wie sie beispielsweise bei Ullmann's encyclopedia of industrial chemistry; 7th edition, 2006 angegeben sind. Besonders bevorzugt ist die Ausführung als Rohr-, Schlaufen oder Rührkesselreaktor bzw. als Reaktivdestillation.

Die Reaktivdestillationskolonne (K1) kann beispielsweise als Packungs- Füllkörper-, oder Bodenkolonne ausgeführt werden. Weiterhin kann der Flüssigkeitsholdup in der Reaktivdestillationskolonne (K1) durch geeignete Einbauten wie Kaminboden oder Ablaufschacht erhöht werden.

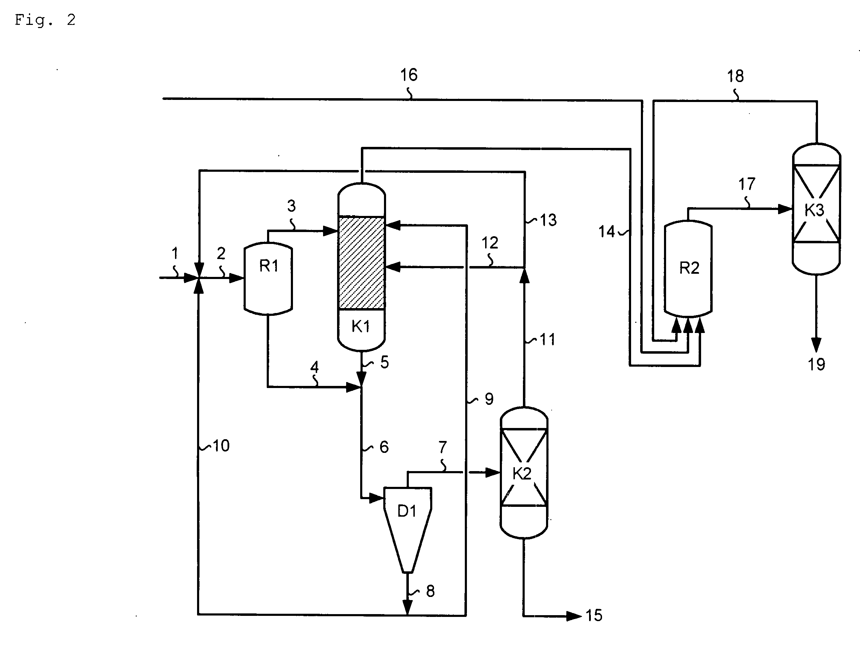

Vorzugsweise können die in der erfindungsgemässen Disproportionierung erhaltenen Silane der allgemeinen Formel (1) anschließend in einer Komproportionierungsreaktion weiter umgesetzt werden. Das Gesamtverfahren stellt eine Konvertierung von Chlorsilanen dar.
Vorzugsweise wird das bei dem erfindungsgemäßen Verfahren durch Disproportionierung von Trichlorsilan hergestellte Dichlorsilan und/oder Monochlorsilan und/oder Silan in einer nachgeschalteten Reaktion mit MeSiCl₃ umgesetzt. Das Zielprodukt MeSiHCl₂ wird in einer Komproportionierungsreaktion in hohen Ausbeuten erhalten.
Ein solches Gesamtverfahren unter Verwendung eines Vorreaktors wird als weitere bevorzugte Ausführungsform des erfindungsgemäßen Verfahrens anhand von Fig. 2 erläutert:

Die aus der Reaktivdestillationskolonne (K1) am Kopf als Strom (14) abgezogenen niedriger chlorierten Silane werden in den Komproportionierungsreaktor (R2) gemeinsam mit höher chlorierten Silanen im Strom (16) und niedriger chlorierten Silanen im Strom (18) eingeleitet. Die Silanprodukte im Strom (17) aus dem Komproportionierungsreaktor (R2) werden in der Destillationskolonne (K3) in einen Strom (18) aus niedriger chlorierten Silanen und in einen Produktstrom (19) aus höher chlorierten Silanen aufgetrennt. Die niedriger chlorierten Silane im Strom (18) werden in den Komproportionierungsreaktor (R2) zurückgeführt.

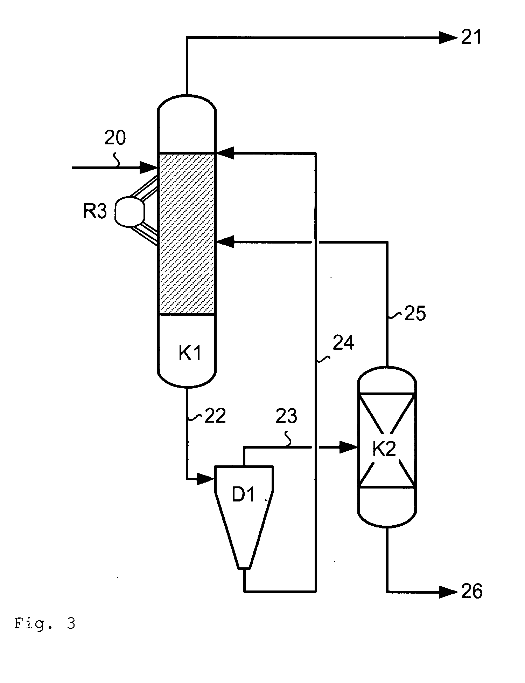

Eine bevorzugte Ausführungsform des erfindungsgemäßen Verfahrens mit einem Seitenreaktor wird anhand von Fig. 3 erläutert:
Edukte werden als Ströme (20) und (25) in die Reaktivdestillationskolonne (K1) eingeleitet. Der Katalysatorstrom (24) wird in die Reaktivdestillationskolonne (K1) eingebracht. Ein Teil der Reaktionsmischung der Reaktivdestillationskolonne (K1) wird durch den Seitenreaktor (R3) geführt. In der Reaktivdestillationskolonne (K1) und im Seitenreaktor (R3) findet die Disproportionierung statt. Dort werden die Edukte über das chemische Gleichgewicht hinaus umgesetzt. In der Reaktivdestillationskolonne (K1) werden am Kopf die niedriger chlorierten Silane als Strom (21) abgezogen. Die Katalysator enthaltenden höher chlorierten Silane verlassen als Sumpf im Strom (22) die Reaktivdestillationskolonne (K1) und werden der Destillationseinheit (D1) zugeführt, in welcher sie in einen Silanstrom (23) und Katalysatorstrom (24) aufgetrennt werden. Der Katalysatorstrom (24) wird in die Reaktivdestillationskolonne (K1) zurückgeführt. Der Silanstrom (23) wird der Destillationskolonne (K2) zugeführt, aus welcher am Sumpf hochchlorierte Silane als Strom (26) abgeleitet werden und der am Kopf gewonnene Strom (25) aus niedriger chlorierten Silanen in die Reaktivdestillationskolonne (K1) zurückgeführt wird.

Im Seitenreaktor (R3) findet eine Erhöhung des Reaktionsvolumens statt. Zu diesem Zweck wird die Flüssigphase in der Reaktivdestillationskolonne (K1) gesammelt und in den Seitenreaktor (R3) geführt. Im Seitenreaktor (R3) erfolgt durch ausreichende Verweilzeit die Umsetzung in die Nähe des chemischen Gleichgewichts. Die Gas- und Flüssigphase werden aus dem Seitenreaktor (R3) an geeigneter Stelle in die Reaktivdestillationskolonne (K1) zurückgeführt.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.).

### Beispiele:

### Beispiel 1 : Disproportionierung zur Herstellung von Chlorsilanen der allgemeinen Formel RₐSiH_{b}X_{4-b-a} (1)

### a) ohne Vorreaktor - nicht erfindungsgemäß

Die Disproportionierung wurde in einer Vorrichtung nach Fig. 4 durchgeführt. Alles Edukt über Strom (1) und aller Katalysator über Strom (8) werden direkt in die Reaktivdestillationskolonne (K1) geführt.

### b) mit Vorreaktor

Die Disproportionierung wurde in einer Vorrichtung nach Fig. 1 durchgeführt. Bei der Reaktionsführung in Verbindung mit dem Vorreaktor (R1) wird das zusätzliche Reaktionsvolumen im Vorreaktor (R1) ausgeführt. Das Feedgemisch aus Edukt und homogenen Katalysator wird in den Vorreaktor (R1) gegeben.

Die Reaktionsführung mit Vorreaktor gemäß Beispiel 1b ermöglicht bei Ausführung des Vorreaktors als Rohrreaktor eine Einsparung der notwendigen Heizleistung von bis zu 23% und bei der Kühlleistung eine Einsparung 25% (siehe Tabelle 1). Neben dem geringeren Energiebedarf verfügt Beispiel 1b) im Vergleich zu Beispiel 1a) über eine bis zu 17% höhere Raum-Zeit-Ausbeute, was zu geringeren Reaktordimensionen führt.

**Tabelle 1: Relativer Energiebedarf und Raum-Zeit-Ausbeute in Abhängigkeit vom installierten Volumen des Vorreaktors bei konstantem Gesamtumsatz des Prozesses. Die erste Zeile gibt das Verhältnis des Volumen des Vorreaktors (R1) zum Reaktionsvolumen in der Reaktivdestillation (K1) wider. Bei einem Verhältnis von 0 liegt zu Vergleichszwecken eine reine Reaktivdestillation gemäß Beispiel 1a vor.**

| | | | | | | |
|---|---|---|---|---|---|---|
| | | | | | | |
| Volumen Vorreaktor/ VolumenReaktivdestillation | [-] | 0,000 | 0,048 | 0,096 | 0,243 | 0,488 |
| relative Heizleistung | [%] | 100,0% | 94,5% | 91,3% | 85,3% | 81,4% |
| relative Kühlleistung | [%] | 100,0% | 94,1% | 90,9% | 84,6% | 80,4% |
| relative. Raum-Zeit Ausbeute | [%] | 100,0% | 104,6% | 107,9% | 113,8% | 116,5% |

**Tabelle 2: Hauptbestandteile der Ströme aus Beispiel 1 für die Disproportionierung von SiHCl₃ und MeSiHCl₂**

| Strom | SiHCl₃ Disproportionierung | MeSiHCl₂ Disproportionierung |
|---|---|---|
| 1 | SiHCl₃ | MeSiHCl₂ |
| 2 | SiHCl₃; Katalysator | MeSiHCl₂ |
| 3 | SiH₃Cl; SiH₂Cl₂; SiHCl₃ | MeSiH₂Cl; MeSiHCl₂ |
| 4 | SiHCl₃; SiCl₄; Katalysator | MeSiHCl₂; MeSiCl₃; Katalysator |
| 5 | SiHCl₃; SiCl₄; Katalysator | MeSiHCl₂; MeSiCl₃; Katalysator |
| 6 | SiHCl₃; SiCl₄; Katalysator | MeSiHCl₂; MeSiCl₃; Katalysator |
| 7 | SiHCl₃; SiCl₄ | MeSiHCl₂; MeSiCl₃; |
| 8 | Katalysator | Katalysator |
| 9 | Katalysator | Katalysator |
| 10 | Katalysator | Katalysator |
| 11 | SiHCl₃ | MeSiHCl₂ |
| 12 | SiHCl₃ | MeSiHCl₂ |
| 13 | SiHCl₃ | MeSiHCl₂ |
| 14 | SiH₄; SiH₃Cl; SiH₂Cl₂ | MeSiH₃ |
| 15 | SiCl₄ | MeSiCl₃ |

### Beispiel 2: Disproportionierung zur Herstellung von Chlorsilanen der allgemeinen Formel RₐSiH_{b}X_{4-b} (1) mit Seitenreaktor

Die Disproportionierung wurde in einer Vorrichtung nach Fig. 3 durchgeführt.

**Tabelle 3: Hauptbestandteile der Ströme aus Beispiel 2 für die Disproportionierung von SiHCl₃ und MeSiHCl₂**

| Strom | SiHCl₃ Disproportionierung | MeSiHCl₂ Disproportionierung |
|---|---|---|
| 20 | SiHCl₃ | MeSiHCl₂ |
| 21 | SiH₄; SiH₃Cl; SiH₂Cl₂ | MeSiH₃ |
| 22 | SiHCl₃; SiCl₄; Katalysator | MeSiHCl₂; MeSiCl₃; Katalysator |
| 23 | SiHCl₃; SiCl₄ | MeSiHCl₂; MeSiCl₃ |
| 24 | Katalysator | Katalysator |
| 25 | SiHCl₃ | MeSiHCl₂ |
| 26 | SiCl₄ | MeSiCl₃; |

### Beispiel 3: Verfahren zur Konvertierung von Chlorsilanen der allgemeinen Formel RₐSiH_{b}X_{4-b} (1) unter Einsatz eines Vorreaktors

Die Disproportionierung wurde in einer Vorrichtung nach Fig. 2 durchgeführt.

**Tabelle 4: Hauptbestandteile und Mengenströme der Ströme aus Beispiel 3**

| | SiHCl₃ | Disproportionierung M₂SiHCl₃ | |
|---|---|---|---|
| Strom | Disproportionierung | Bestandteile | Mengenstrom kg/h |
| 1 | SiHCl₃ | MeSiHCl₂ | 10,0 |
| 2 | SiHCl₃;Katalysator | MeSiHCl₂ | 11,4 |
| 3 | SiH₃Cl;SiH₂Cl₂;SiHCl₃ | MeSiH₂Cl; MeSiHCl₂ | 2,4 |
| 4 | SiHCl₃; SiCl₄; Katalysator | MeSiHCl₂; MeSiCl₃; Katalysator | 9,0 |
| 5 | SiHCl₃; SiCl₄; Katalysator | MeSiHCl₂; MeSiCl₃; Katalysator | 17,5 |
| 6 | SiHCl₃; SiCl₄; Katalysator | MeSiHCl₂; MeSiCl₃; Katalysator | 26,4 |
| 7 | SiHCl₃;SiCl₄ | MeSiHCl₂; MeSiCl₃; | 23,0 |
| 8 | Katalysator | Katalysator | 3,4 |
| 9 | Katalysator | Katalysator | 2,1 |
| 10 | Katalysator | Katalysator | 1,4 |
| 11 | SiHCl₃ | MeSiHCl₂ | 14,7 |
| 12 | SiHCl₃ | MeSiHCl₂ | 14,7 |
| 13 | SiHCl₃ | MeSiHCl₂ | 0,0 |
| 14 | SiH₄ ; SiH₃Cl; SiH₂Cl₂ | MeSiH₃; MeSiH₂Cl | 1,7 |
| 15 | SiCl₄ | MeSiCl₃ | 8, 3 |
| 16 | MeSiCl₃ | Me₂SiCl₂ | 18, 1 |
| 17 | SiH₄; SiH₃Cl; SiH₂Cl₂;SiHCl₃ MeSiHCl₂; MeSiCl₃ | MeSiH₃; MeSiH₂Cl; MeSiHCl₃;Me₂SiHCl; Me₂SiCl₂ | 30,1 |
| 18 | SiH₄; SiH₃Cl; SiH₂Cl₂ | MeSiH₃; MeSiH₂Cl | 10,4 |
| 19 | SiHCl_{3;}MeSiHCl₂;MeSiCl₃ | MeSiHCl₂; Me₂SiHCl; Me₂SiCl₂ | 19,7 |

## Patentansprüche

1. Verfahren zur Herstellung von Silanen durch Disproportionierung mindestens eines höher chlorierten Silanes, bei dem die Disproportionierungsreaktionen, die ausgewählt werden aus (1), (2) und (3), ausgehend von SiHCl₃ durchgeführt werden :
2 SiHCl₃ → SiH₂Cl₂ + SiCl₄ (1),
3 SiHCl₃ → SiH₃Cl + 2 SiCl₄ (2),
4 SiHCl₃ → SiH₄ + 3 SiCl₄ (3)
oder bei dem die Disproportionierungsreaktionen, die ausgewählt werden aus (4) und (5), ausgehend von MeSiHCl₂ durchgeführt werden:
2 MeSiHCl₂ → MeSiH₂Cl + MeSiCl₃ (4)
3 MeSiHCl₂ → MeSiH₃ + 2 MeSiCl₃ (5),
in Gegenwart eines homogenen Katalysators in einer Vorrichtung, die mindestens mit einer Reaktivdestillationskolonne und mindestens einem Zusatzreaktor, der ausgewählt wird aus Vor- oder Seitenreaktor, ausgestattet ist,
wobei im Zusatzreaktor die Edukte über das chemische Gleichgewicht hinaus umgesetzt werden und wobei bei dem Vorreaktor mindestens ein Eduktstrom in den Vorreaktor führt und mindestens ein Teilstrom aus dem Vorreaktor in die Reaktivdestillationskolonne geführt wird und eine direkte Rückführung von Teilströmen aus der Reaktivdestillationskolonne in den Vorreaktor nicht stattfindet.

2. Verfahren nach Anspruch 1, bei dem der homogene Katalysator mindestens eine vollständig organisch substituierte Ammonium- , Phosphonium- oder Imidazolium-Einheit enthält.

## Claims

1. Process for preparing silanes by disproportionation of at least one more highly chlorinated silane, wherein disproportionation reactions selected from among (1), (2) and (3) starting from SiHCl₃ are carried out:
2 SiHCl₃ → SiH₂Cl₂ + SiCl₄ (1),
3 SiHCl₃ → SiH₃Cl + 2 SiCl₄ (2),
4 SiHCl₃ → SiH₄ + 3 SiCl₄ (3)
or disproportionation reactions selected from among (4) and (5) starting from MeSiHCl₂ are carried out:
2 MeSiHCl₂ → MeSiH₂Cl + MeSiCl₃ (4)
3 MeSiHCl₂ → MeSiH₃ + 2 MeSiCl₃ (5),
in the presence of a homogeneous catalyst in an apparatus which is equipped with at least one reactive distillation column and at least one additional reactor selected from among prereactors and side reactors,
where the starting materials are reacted to beyond the chemical equilibrium in the additional reactor and, in the prereactor, at least one feed stream is fed into the prereactor and at least one substream is conveyed from the prereactor into the reactive distillation column and direct recirculation of substreams from the reactive distillation column into the prereactor does not take place.

2. Process according to Claim 1, wherein the homogeneous catalyst comprises at least one fully organically substituted ammonium, phosphonium or imidazolium unit.

## Revendications

1. Procédé de fabrication de silanes par dismutation d'au moins un silane chloré supérieur, dans lequel les réactions de dismutation, qui sont choisies parmi (1), (2) et (3), sont réalisées à partir de SiHCl₃ :
2 SiHCl₃ -> SiH₂Cl₂ + SiCl₄ (1)
3 SiHCl₃ -> SiH₃Cl + 2 SiCl₄ (2)
4 SiHCl₃ -> SiH₄ + 3 SiCl₄ (3)
ou dans lequel les réactions de dismutation, qui sont choisies parmi (4) et (5), sont réalisées à partir de MeSiHCl₂ :
2 MeSiHCl₂ -> MeSiH₂Cl + MeSiCl₃ (4)
3 MeSiHCl₂ -> MeSiH₃ + 2 MeSiCl₃ (5)
en présence d'un catalyseur homogène, dans un dispositif qui est équipé d'au moins une colonne de distillation réactive et d'au moins un réacteur supplémentaire choisi parmi un pré-réacteur ou un réacteur latéral,
les réactifs étant transformés au-delà de l'équilibre chimique dans le réacteur supplémentaire,
et, en cas de pré-réacteur, au moins un courant de réactif étant introduit dans le pré-réacteur et au moins un courant partiel issu du pré-réacteur étant introduit dans la colonne de distillation réactive, et un recyclage direct de courants partiels issus de la colonne de distillation réactive dans le pré-réacteur n'ayant pas lieu.

2. Procédé selon la revendication 1, dans lequel le catalyseur homogène contient au moins une unité ammonium, phosphonium ou imidazolium entièrement substituée organiquement.
